Europäisches Patentamt

European Patent Office

Office européen des brevets

(11) Publication number: **0 288 635**
**A2**

# (12) EUROPEAN PATENT APPLICATION

(21) Application number: **87308099.8**

(22) Date of filing: **14.09.87**

(51) Int. Cl.⁴: **B05B 1/30**

(30) Priority: **28.04.87 JP 106009/87**

(43) Date of publication of application:
**02.11.88 Bulletin 88/44**

(84) Designated Contracting States:
**DE FR GB IT**

(71) Applicant: **Kabushiki Kaisha Polyurethane Engineering**
**9-12, 2-chome Osaki**
**Shinagawa-ku Tokyo-to(JP)**

(72) Inventor: **Tawada, Takeshi**
**16-2, Aza-minami-no-kiri Wakamatsu-cho**
**Okazaki-shi Aichi-ken(JP)**

(74) Representative: **Lyndon-Stanford, Edward Willoughby Brooke et al**
**MARKS & CLERK 57/60 Lincoln's Inn Fields**
**London WC2A 3LS(GB)**

(54) **Nozzle Assembly.**

(57) A nozzle assembly has a nozzle body (15) which has a fluid passage (11) with a conical nozzle port (13) at its front end. Inlet ports (20,25) open into the fluid passage (11) in tangential directions, and a control valve (30) is located in the fluid passage (11) so as to move axially of the fluid passage (11) to control the cross-sectional areas of the inlet ports (20,25). The nozzle assembly can eject either a diffused fluid in the form of a cone, or a sprayed fluid, and the diffusion angle can be varied when the ejection speed or viscosity of the fluid vary.

FIG. 1

## NOZZLE ASSEMBLY

### BACKGROUND OF THE INVENTION

Field of the Invention

The present invention relates to a nozzle assembly and more precisely it relates to a nozzle assembly which can control the ejection of the fluid.

Description of the Related Art

Generally speaking, the nozzle accelerates the highly pressurized fluid to convert the pressure of the fluid to a kinetic energy in order to create a flow of fluid having a high velocity or a diffused flow of fluid.

A nozzle, such as a needle type of nozzle, in which the conversion of the pressure of the fluid to the kinematic energy, namely the acceleration and the diffusion of the fluid flow can be controlled is also known. As is well known, this type of nozzle has a needle which moves in a nozzle port to control the sectional area of the nozzle port thereby to vary the ejection state of the fluid. The control is, however, mainly directed to the flow rate of the fluid. In other words, it is very difficult for the known nozzle to control the diffusion angle of the flow which varies in accordance with the change of the flow rate.

It is also known to provide a guide vane in the nozzle port to give a predetermined diffusion angle to the flow. However, the diffusion angle can not be varied, since the diffusion angle is fixed by the guide vane.

For instance, in a mixing apparatus of synthetic resin containing a plurality of resin components, such as polyurethane resin or the like, two nozzles are opposed to eject reactive resin components at a high speed, so that the ejected components come into collision with each other, whereby the synthetic resin is stirred and mixed. It is very important to effectively diffuse the resin components at the collision in order to increase the contact surface area therebetween, thereby to effectively mix the resin components. Furthermore, it is desirable to control the ejection state of the flow, such as the flow rate and the diffusion angle etc., in view of the difference in viscosity between the resin components to be mixed.

The known needle type of nozzle can not satisfy the requirements mentioned above, since it is very difficult to precisely control both the flow rate and the diffusion angle which varies in accordance with the change of the flow rate, as mentioned before.

The needle type of nozzle has another drawback that the nozzle port a cross sectional area of which is controlled by a movable needle located at the center of the nozzle port can be easily clogged with a foreign matter, such as dust or other substances which have been accidentally mixed, resulting in an disturbance of the flow to be ejected from the nozzle port.

The primary object of the present invention is to eliminate the above mentioned drawbacks by providing a novel nozzle assembly which can eject either a diffused fluid in the form of a cone or a sprayed fluid.

Another object of the present invention is to provide a nozzle assembly which can control the diffusion angle of the fluid when the ejection speed or viscosity of the fluid to be ejected vary.

To achieve the objects mentioned above, according to the present invention, there is provided a nozzle assembly having a nozzle body which has a fluid passage with a conical nozzle port at the front end of the fluid passage, said nozzle body being provided, on its outer periphery, with at least one inlet port which opens into the fluid passage in the tangential direction, and a control valve which is provided in the fluid passage so as to move forward and backward to control the sectional area of the inlet port.

With the arrangement mentioned above, the fluid enters the fluid passage in the tangential directions through the inlet port provided on the outer periphery of the nozzle body. The fluid in the fluid passage flows forward along the inner peripheral wall of the fluid passage while swirling in the fluid passage, and is ejected from the conical nozzle port. The flow speed of the fluid is accelerated by the conical nozzle port. By the diffusion function of the conical nozzle port and also by the centrifugal force due to the swirl of the fluid, the fluid can be ejected in the conical form or in a sprayed state, from the nozzle port.

The control valve adjusts the sectional area of the inlet port of the nozzle body in order to vary the swirl speed of the fluid in the fluid passage, thereby to control the ejection conditions of the fluid, such as a diffusion speed or a diffusion angle, of the fluid, in accordance with the property of the fluid or if needed.

## DESCRIPTION OF EMBODIMENTS

The invention will be described below in detail with reference to the accompanying drawings, in which:

Fig. 1 is a sectional view of a nozzle assembly according to an aspect of the present invention;

Fig. 2 is a sectional view taken along the line 2-2 in Fig. 1, showing an inlet port of the nozzle assembly;

Fig. 3 is a perspective view of a nozzle assembly shown in Fig. 1; and,

Fig. 4 is a sectional view of a main part of a mixing apparatus of synthetic resin containing multiple resin components, having a nozzle assembly of the present invention incorporated therein.

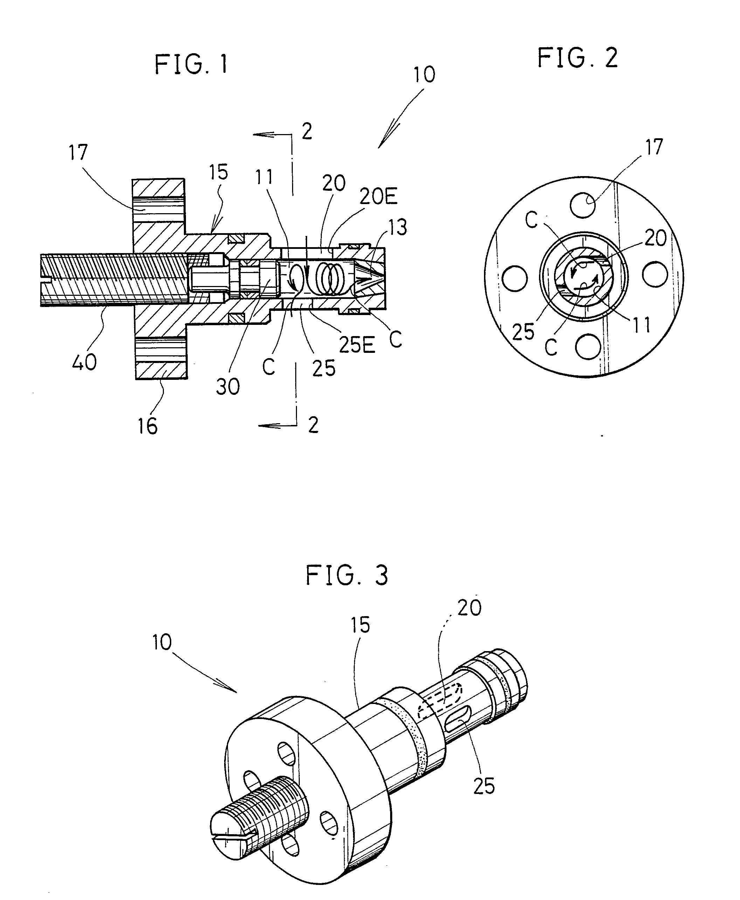

With reference to Figs. 1 to 3, the nozzle assembly 10 has a nozzle body 15 which has a fluid passage 11 which is provided on its front end with a conical nozzle port 13. On the outer periphery of the nozzle body 15 are provided two inlet ports 20 and 25 which open into the fluid passage 11 in the tangential direction thereto. The nozzle assembly 10 has a control valve 30 which is provided in the fluid passage 11 so as to move forward and backward to control the cross sectional areas of the inlet ports 20 and 25.

Numerals 16 and 17 designate a flange and mounting holes, respectively, so that the nozzle assembly 10 can be secured to an associated device (not shown).

As mentioned above, according to the present invention, the inlet ports 20 and 25 extend in the tangetial directions to the fluid passage 15 when viewed in a cross section of the fluid passage, as can be seen from Fig. 2, so that the fluid which enters the fluid passage through the inlet ports 20 and 25 flows along the circular wall of the fluid passage which has a circular cross section while swirling, as shown by arrows C in Figs. 1 and 2.

In the illustrated embodiment, two inlet ports 20 and 25 are diametrically opposed to effectively swirl the fluid flow.

Only one inlet port or more than two inlet ports can be provided.

The control valve 30 controls the cross sectional areas of the inlet ports 20 and 25. The control valve 30 is actuated by a threaded member 40 which is screwed in the nozzle body 15 at the rear end of the latter. The adjusting screw (threaded member) 40 adjusts the axial displacement of the control valve 30 to control the cross sectional areas of the inlet ports 20 and 25.

In the illustrated embodiment, the inlet ports 20 and 25 have different axial lengths in the direction of the movement of the control valve 30, so that they have front ends 20E and 25E at different axial positions. This enables the control valve 30 to control the cross sectional areas of the inlet ports 20 and 25 more precisely with various modes.

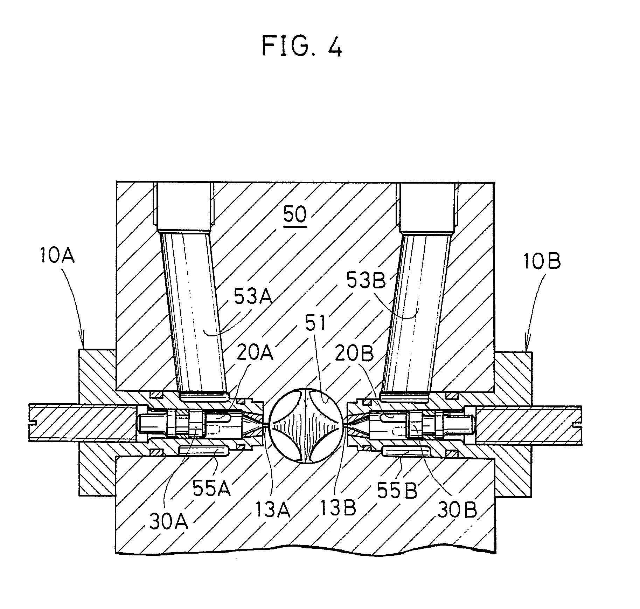

Fig. 4 shows a mixing apparatus for polyurethane resin, in which the nozzle assemblies of the present invention mentioned above are incorporated.

The mixing apparatus has a body block 50 which has therein a mixing chamber 51. Two nozzle assemblies 10A and 10B according to the present invention are located on the opposite sides of the mixing chamber 51, so that the nozzle ports 13A and 13B of the nozzle assemblies 10A and 10B are diametrically opposed to each other. Reactive resin components are ejected from the respective nozzle ports 13A and 13B into the mixing chamber 51, so that the resin components come into collision with each other and are mixed in the mixing chamber 51. The mixture is then introduced into a molding cavity (not shown).

Numerals 53A and 53B designate introduction passages through which the respective resin components are introduced into the nozzle assemblies 10A and 10B. The introduction passages 53A and 53B which are formed in the body block 50 have connecting portions 55A and 55B which are connected to the inlet ports 20A, 20B etc. of the nozzle assemblies 10A and 10B.

The resin components ejected into the mixing chamber 51 from the nozzle ports 13A and 13B of the nozzle assemblies 10A and 10B are conically diffused or sprayed to come into collision with each other at a high speed to be mixed.

In this type of mixing apparatus, it is desirable to make the kinetic momenta of the resin components identical to each other, so that the collision takes place in the vicinity of the center of the mixing chamber 51. For this purpose, the kinetic momenta of the resin componets can be controlled by the control valves 30A and 30B which move forward and backward in the fluid passages of the nozzle assemblies 10A and 10B to control the cross sectional areas of the inlet ports 20A, 25A (20B, 25B) depending on the properties of the resin components.

It has been experimentally confirmed that the ratio between the pressure of the resin components upstream of the inlet ports and the pressure of the resin components downstream of the inlet ports, namely a ratio of reduction of the area, was 10 - 50 % which is good, in the illustrated polyurethane mixing apparatus.

As can be understood from the above discussion, according to the present invention, since the inlet ports extend in the tangential directions of the fluid passage so as to make a swirl of the fluid, it is ensured that the fluid is conically diffused or sprayed. Furthermore, since the control valve which is provided in the fluid passage so as to axially move forward and backward to control the sectional areas of the inlet ports, the swirl speed of the fluid in the fluid passage can be controlled and accordingly, the ejection state of the fluid, i.e. the diffusion speed and the diffusion angle of the fluid, etc. can be effectively controlled in accordance with the properties of the fluid. In particular, even when the viscosity of the fluid or the ejection speed of the fluid varies, the fluid can be diffused in a desired state by the control valve.

The present invention has been described above purely by way of example, and modifications can be made within the spirit of the invention.

## Claims

1. A nozzle assmebly comprising a nozzle body (15) which has a fluid passage (11) provide with a nozzle port (13) at a front end of the fluid passage (11), said nozzle body (15) being provided with at least one inlet port (20,25) which opens into the fluid passage (11), and with a control valve (30) which can be moved forward and backward in the fluid passage (11), for controlling the ejection of the fluid characterised in that the inlet port (20,25) opens into the fluid passage (11) in a tangential direction to the latter, and in that the control valve (30) is positioned to control the cross-sectional area of the inlet port (20,25).

2. A nozzle assembly according to Claim 1, wherein said nozzle body (15) is provided with two inlet ports (10,25) which are diametrically opposed to each other with respect to the axis of the fluid passage (11) and which open into the fluid passage (11) in tangential directions.

3. A nozzle assembly according to Claim 1 or 2, wherein there is a plurality of inlet ports (20,25) and the inlet ports (20.25) have different axial lengths in the axial direction of the fluid passage.

4. A nozzle assembly according to Claim 3, wherein one inlet port (20) extends further forward, away from the control valve (30), than another inlet port (25).

5. A nozzle assembly according to any of the preceding Claims, further comprising an actuator (40) for actuating the control valve (30).

6. A nozzle assembly according to any of the preceding Claims, wherein the inlet port(s) (20,25) is provided in the outer periphery of the nozzle body (15).

7. A nozzle assembly according to any of the preceding Claims, wherein the nozzle port (13) is conical.

8. A mixing apparatus having a body block (50) which has therein a mixing chamber (51), wherein two nozzle assemblies (10A,10B) each constructed as recited in any of the preceding Claims are located on opposite sides of the mixing chamber (51), so that the nozzle ports (13) of the two nozzle assemblies (10A,10B) are diametrically opposed to each other.

# FIG. 1

# FIG. 2

# FIG. 3

FIG. 4